(19) Europäisches Patentamt
European Patent Office
Office européen des brevets

(11) **EP 1 796 296 A1**

(12) **EUROPEAN PATENT APPLICATION**
published in accordance with Art. 158(3) EPC

(43) Date of publication:
**13.06.2007 Bulletin 2007/24**

(51) Int Cl.:
**H04B 10/08** (2006.01)

(21) Application number: **05729106.4**

(22) Date of filing: **16.03.2005**

(86) International application number:
**PCT/CN2005/000321**

(87) International publication number:
**WO 2006/034614 (06.04.2006 Gazette 2006/14)**

(84) Designated Contracting States:
**AT BE BG CH CY CZ DE DK EE ES FI FR GB GR HU IE IS IT LI LT LU MC NL PL PT RO SE SI SK TR**

(30) Priority: **28.09.2004 CN 200410080096**

(71) Applicant: **ZTE Corporation**
**Guangdong 518057 (CN)**

(72) Inventor: **SUN, Desheng,**
**ZTE Plaza, Keji Road South**
**Guangdong 518057 (CN)**

(74) Representative: **Garratt, Peter Douglas et al**
**Mathys & Squire**
**120 Holborn**
**London EC1N 2SQ (GB)**

(54) **THE QUICK PROTECTION METHOD IN OPTICAL RING NETWORK**

(57)     The present invention discloses a quick protection method in optical transmission ring network, and its main thought is to configure a transparent channel using available multiplexing section overheads of the transmission network. Each network element judges the fault section of the network through the transparent channel before receiving a signaling request, and completes protocol processing based on the fault section and realizes quick processing. Using the method of the present invention can greatly shorten the protection switching time of optical transmission ring network, and the principal characteristic of the method that the present invention brings forward is to configure a transparent channel to quickly transmit request information without changing the original protection switching protocol processing unit, thereby achieving a good reliability. Meanwhile, there is a plurality of overheads in the multiplexing section of SDH/SONET network, and compared with other methods of prior art, the method of the present invention has the characteristic of low cost.

FIG. 5

EP 1 796 296 A1

**Description**

Technical Field

The present invention relates to optical transmission field, and specifically, to a protection switching method of optical transmission ring network.

Background of the Invention

Optical transmission ring network has been widely used in telecom field. ITU-TG.841 suggestion, i.e. *Classification and Characteristics of the Protection Structure of SDH Network,* describes the self-healing function of SDH/ SONET optical transmission ring type network more detailedly. Wherein, two-fiber or four-fiber bi-directional multiplex section shared protection ring (abbrev. BLSR) is the uppermost self-healing manner. ITU-TG.841 suggestion prescribes that SDH/SONET loads signaling message at the multiplex section overhead K1 and K2 bytes of the transfer frame of SDH/SONET. ITU-TG.841 suggestion also prescribes that a time interval between the startup of protection switching and its completion should be less than 50 milliseconds so as to decrease service interruption as much as possible.
Generally speaking, when the service interruption time is less than 50 milliseconds, most requirement of service quality can be reached. However, when the optical transmission ring network is of relatively large scale and there are relatively more transmission network elements, it is difficult to ensure that the protection switching time is 50 milliseconds.

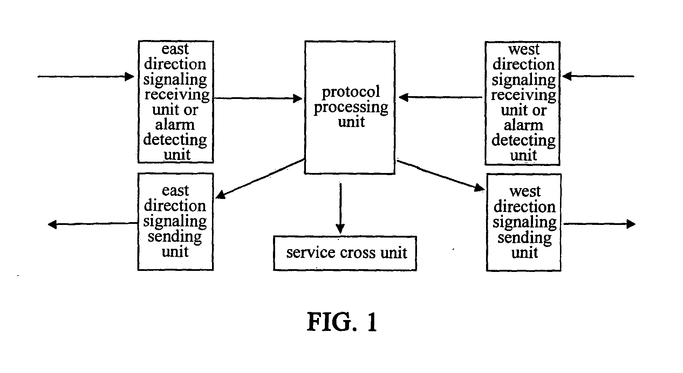

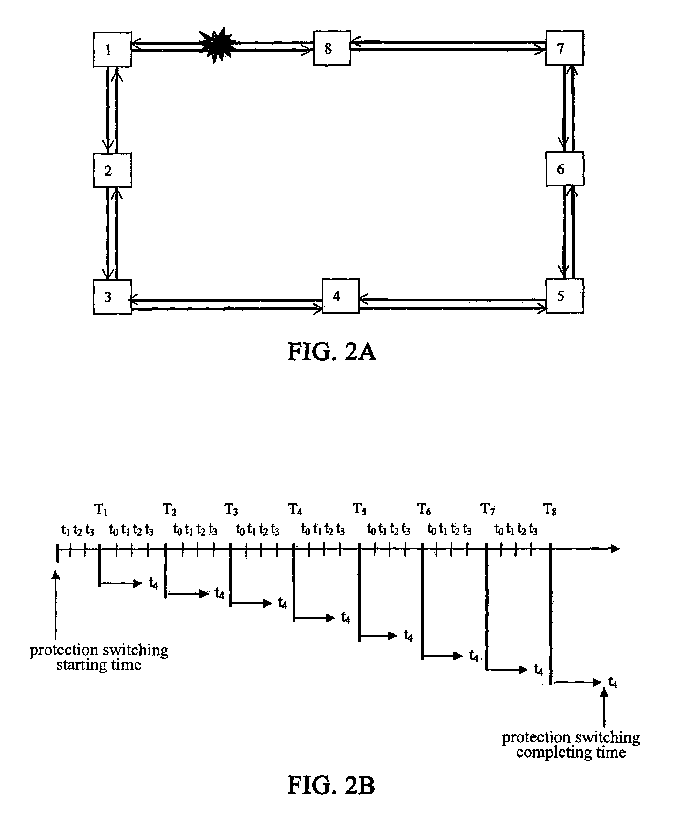

Figure 1 is a structural view showing that the optical transmission network element processes protection switching according to G.841 suggestion. As shown in figure 1, units involved in the protection switching processing by the transmission network elements include an east/west direction signaling receiving or alarm detecting unit, an east/west direction signaling sending unit, a protocol processing unit, and a service cross unit. After detecting a new alarm or a new signaling, the signaling receiving or the alarm detecting unit transmits the alarm or the signaling information to the protocol processing unit, and the protocol processing unit generates a signaling according to a protocol principle and transmits the signaling to the signaling sending unit, and finally the signaling is sent out through an optical port. When generating the signaling according to the protocol principle, the protocol processing unit also generates a corresponding service cross relation, and sends it to the service cross unit for conducting service cross. Thus, in the view of one transmission network element, processing procedures for protecting switching can be divided into an alarm detecting or signaling receiving procedure, a protocol processing procedure, a signaling sending procedure, and a cross unit processing procedure. The method for calculating the protection switching time which is processed according to G.841 suggestion is described below with the eight-network element transmission ring network as shown in figure 2A as an example. As shown in figure 2A, when the section between network element 1 and network element 8 is in trouble, the signaling receiving or alarm detecting unit detects an alarm and notify the protocol processing unit, then the protocol processing unit generates a new signaling and the signaling sending unit sends the new signaling to the next network element. Since network element 1 and network element 8 detect the alarm at the same time, their processing procedures are always conducted at the same time. Thus, the procedure for protection switching can be simplified as the procedure shown in figure 2B. As shown in figure 2B, the total protection switching time is:

$$T = \sum T_i - t_0 + t_4$$

$$T_i = t_0 + t_1 + t_2 + t_3 \qquad\qquad (i=1,2,\dots,8) \qquad\qquad (1)$$

In formula (1), $t_0$ is the time for transmitting the signaling in an optical fiber section, $t_1$ is the processing time for receiving the signaling or the time for detecting the alarm, $t_2$ is the protocol processing time, $t_3$ is the processing time for sending the signaling, and $t_4$ is the processing time of cross unit. The whole procedure, from receiving the protocol signaling to finishing processing by the protocol processing unit and finally sending out the protocol signaling by the signaling sending unit, is conducted orderly and the whole processing time is the Ti in formula (1).
The Chinese patent application No. 98113149.2 proposes a method for quickening protection switching. The basic principle of this method lies in shortening the processing time of the cross unit, i.e. $t_4$ in formula (1). It can be seen from figure 2A together with formula (1) that only the processing time of the cross unit of the last network element affects the protection switching time of the whole network, so the improvements made by this method are limited.
The US patent application No. 5,636,205 proposes a method for quickening protection switching. Through a signaling comparing unit, this method judges signaling bytes received by a network element and determines whether to bypass the signaling according to the destination ID in the signaling bytes. The method mainly aims to shorten the protocol processing time, i.e. $t_2$ in formula (1). Compared with the Chinese patent application No. 98113149.2, this method makes obvious improvements. However, the improvements depend on the method for realizing the signaling comparing unit. If said unit is realized through hardware, the improvements are obvious, but the cost increases. If said unit is realized through software, the improvements are not so obvious. No matter adopting which method to realize said unit, this patent artificially divides the protocol processing unit for the protection switching into a signaling comparing unit and a protocol processing unit, the processing is complex and high risk is introduced. To reduce the risk, the signaling comparing unit should add many logic judgments, however, the addition of logic judgments certainly decreases the improvements.

Summary of the Invention

The present invention aims to propose a simple and reliable quick protection method for the optical transmission ring network.

The main thought of the present invention is to construct a transparent channel using available multiplex section overhead of the transmission network, the respective network element judges the fault section of the network through the transparent channel before receiving a signaling request, and completes protocol processing based on the fault section to realize the quick processing.

The quick protection method for optical transmission ring network according to the present invention comprises the following steps:

Step 1, configuring a transparent channel through a network management layer;

Step 2, the alarm detecting module of respective network elements detecting the situations of a optical line in real-time, and a signaling detecting unit detects the changes of signaling bytes and the transparent channel overhead bytes in real-time;

Step 3, if an alarm or network management switching command is detected, step 4 is executed; if change of the transparent channel overhead bytes is detected, executing step 5; and if change of the signaling bytes is detected, executing step 6;

Step 4, after the network element which detects the alarm or network management switching command finishes the protocol processing, the overhead cross unit cutting off the east/west direction transparent channel and copying the non-fault direction signaling bytes to be sent to the overhead bytes corresponding to the transparent channel for sending; or, the overhead cross unit generating a simplified signaling according to the protocol signaling information to be sent and writing it into the overhead bytes corresponding to the transparent channel for sending, executing step 7 ;

Step 5, for the network element which detects the change of the transparent channel overhead bytes, if the current state is a switching state, then the overhead bytes being not processed; if the current state is an idle state or a pass-through state, then sending the overhead bytes to protocol processing module for processing as the signaling bytes received by the signaling detecting unit of corresponding direction; or, if the simplified signaling is received, generating relevant received signaling information according to the simplified signaling and sending it to the protocol processing module for processing. Then go back to step 2;

Step 6, if the received signaling instruction is a short path request which destination is the present network element, after the network element finishes the protocol processing and the cuts off the east-west direction transparent channel, the overhead cross unit copying the signaling bytes to be sent to the overhead bytes corresponding to the transparent channel and sending those in another direction opposite to the direction of receiving the short path request; or, generating simplified signaling according to the information to be sent and writing it into the overhead bytes corresponding to the transparent channel for sending. Otherwise, processing being conducted according to G.841 protocol; and

step 7, if the alarm disappears or the network management switching command is cancelled, two switching network elements automatically writing the default signaling code type of the protection switching protocol into the transparent channel, and turning on the east-west direction transparent channel again, then going back to step 2; otherwise, going back to step 2 directly.

In above-mentioned step 1, the method for configuring the transparent channel in step 1 is as follows: according to the use of the multiplexing section overheads of the network element sections, designating two available overhead bytes at the east direction section and the west direction section of the network element, and turning on the east-west direction channel where the overhead bytes are located through the overhead cross unit.

In addition, the method for configuring the transparent channel can also be as follows: according to the use of the multiplexing section overheads of respective network element sections, designating one available overhead byte at the east direction section and the west direction section of the network element orderly, and turning on the east-west direction channel where the overhead byte is located through the overhead cross unit.

In case that the above mentioned transparent channel is the transparent channel of one an overhead byte, the quick protection method in the optical transmission ring network comprises the following steps:

Step 1, configuring a transparent channel through a network management layer;

Step 2, a alarm detecting module of respective network elements detecting the situations of a optical line in real-time, and a signaling detecting unit detecting the changes of signaling bytes and the transparent channel overhead bytes in real-time;

Step 3, if an alarm or a network management switching command is detected, executing step 4; if change of the transparent channel overhead bytes is detected, executing step 5; and if change of the signaling bytes is detected, executing step 6;

Step 4, after the network element which detects the alarm or the network management switching command finishing the protocol processing, the overhead cross unit cutting off the east-west direction transparent channel and generating a simplified signaling according to the protocol signaling information to be sent and writing it into the overhead bytes corresponding to the transparent channel for sending;

Step 5, for the network element which detects the change of the transparent channel overhead bytes, if the current state is a switching state, then the overhead bytes being not processed; if the current state is an idle state or a pass-through state, then generating relevant received signaling information according to the simplified signaling and sending it to the protocol processing module for processing;

Step 6, if the received signaling instruction is a short path request which purpose is the present network element, after the network element finishes processing the protocol and cuts off the east-west direction transparent channel, the overhead cross unit generating a simplified signaling according to the information to be sent and writing it into the overhead bytes corresponding to the transparent channel for sending in another direction opposite to the direction of receiving the short path request; and

Step 7, if the alarm disappears or the network management switching command is cancelled, two switching network elements automatically writing the default signaling code type of the protection switching protocol into the transparent channel, and turning on the east-west direction transparent channel again, then going back to step 2; otherwise, going back to step 2 directly.

For the method of the present invention in the optical transmission ring network, except the fault detecting unit, other network elements can receive the request information transmitted by the transparent channel several optical transmission time delays to later after the fault network element sends out a request. After the transparent channel is established, the network element which monitors the alarm writes information into the transparent channel, since the transparent channel is generally a ring, the information written by the network element which monitors the alarm will be transmitted at the velocity of light. Hence, other downstream network elements of the network elements which monitor the alarm can detect the information after several transmission delays. Thus, the switching time calculated with the protection method proposed by the present invention is:

$$T = (N - 1) \times t_0 + 2 \times (t_1 + t_2 + t_3) + t_4 \qquad (2)$$

Wherein, N in formula 2 is the number of the network element of the optical transmission ring network, and $t_0$, $t_1$, $t_2$, $t_3$, and $t_4$ are the same as those in formula (1).

Supposing N is 8, $t_0$ is 1 millisecond, $t_1$, $t_2$, $t_3$, and $t_4$ are all 3 milliseconds, then basing on formula (1), the protection switching time processed in accordance with the method described by G.841 can be calculated and the result is 82 milliseconds. If the processing time $t_4$ of the service cross unit of one network element is removed, the switching time in the method according to the patent application No. 98113149.2 is 79 milliseconds. If the protocol processing time $t_2$ of 6 middle network elements is removed, the switching time in the method according to patent application No. 5,636,205 is 64 milliseconds. However, if the method of the present patent is adopted, according to formula (2), it can be seen that the protection switching time is only 28 milliseconds. Thus, it can be seen that the method proposed by the present invention has better technical effects.

Brief Description of the Accompanying Drawings

Figure 1 is a structural view showing an optical transmission network element processes protection switching according to G.841 suggestion;

Figure 2A is a schematic view showing a two-fiber bi-directional multiplexing section shared protection ring which protects eight network elements;

Figure 2B is a schematic view showing the network in figure 2A calculates the protection switching time according to G.841 suggestion;

Figure 3A is structural view showing the protection switching in the optical transmission network element adopting the method of the present invention;

Figure 3B is a schematic view showing the network in figure 2A is configured with a transparent channel;

Figure 4 is a schematic view showing a ring network comprising N network elements calculates the protection switching time according to the method of the present invention; and

Figure 5 is a flow view of the method proposed by the present invention.

Embodiments for Carrying Out the Present Invention

The present invention will be further described in detail with reference to the accompanying drawings and the embodiment thereof.

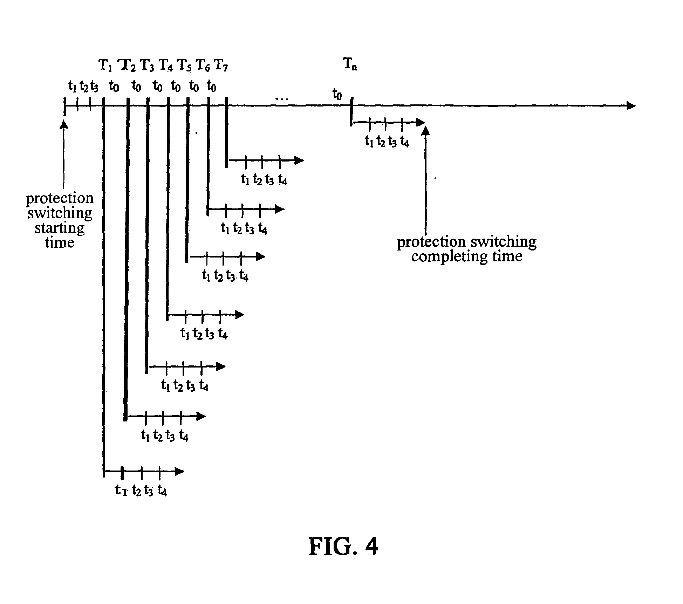

Wherein, figures 1, 2A, and 2B have been described in the portion of Background Art. Figure 4 is a schematic view showing the calculation of the protection switching time of the protection method proposed by the present invention.

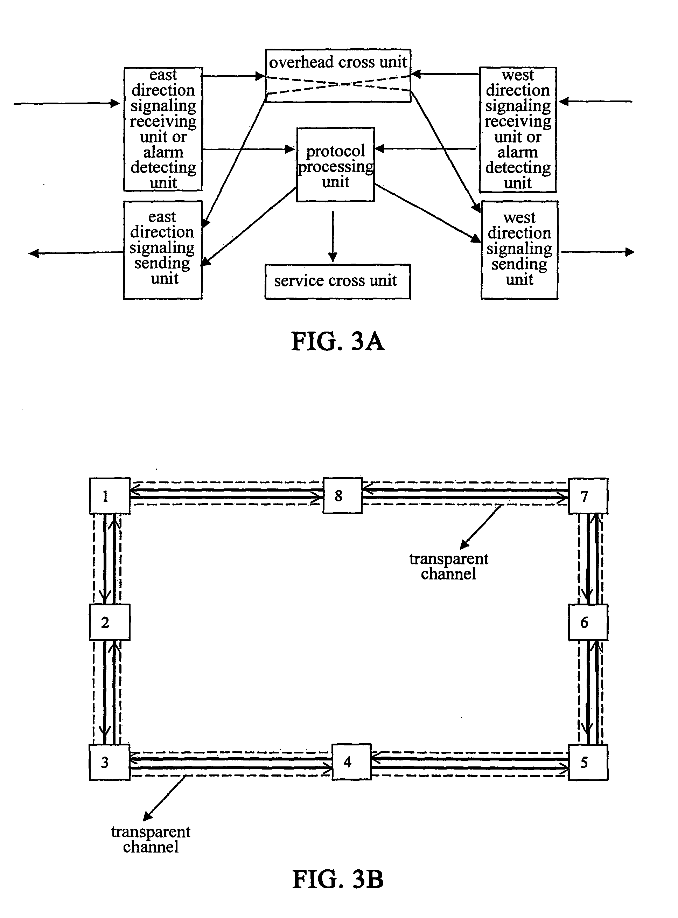

Figure 3A is structural view showing the protection switching in the optical transmission network element adopting the method of the present invention. As shown in figure 3A, an overhead cross processing unit is added on the basis of figure 1. The overhead cross unit turns on or cuts off the east-west transparent channel according to the instruction of the protocol processing unit, and writes specific information etc into the transparent channel according to the information notified by the protocol processing unit.

Figure 3B is a schematic view showing the network in figure 2A is configured with a transparent channel. As shown in figure 3B, two bi-directional transparent channels which encircle the whole transmission ring network are configured on the basis of figure 2A. Moreover, through the overhead cross unit, it can be ensured that in idle situation the overhead bytes transmitted by the transparent channel are the default signaling code type of the protection switching protocol.

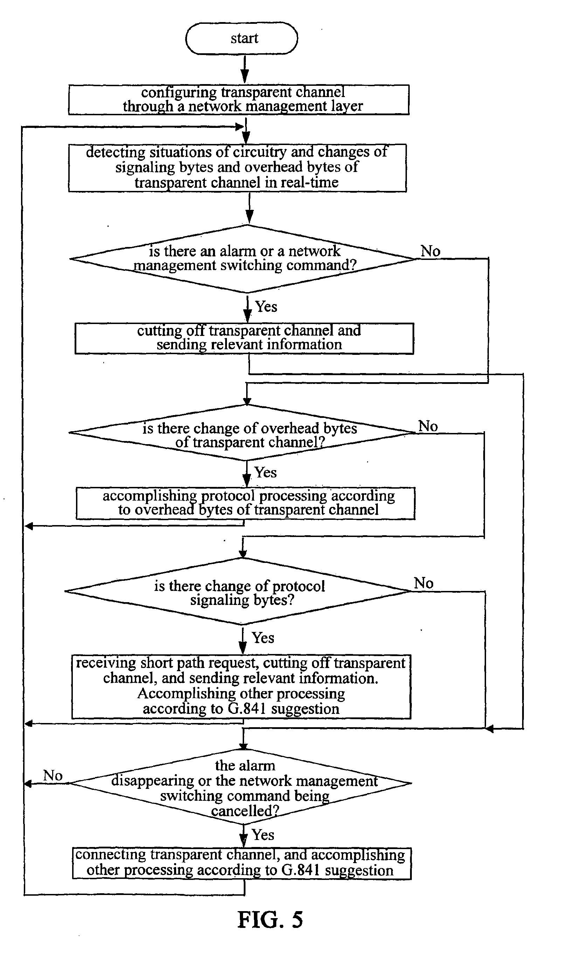

Figure 5 is a flow view of the method proposed by the present invention. Thereafter, taking that the network shown in figure 3B faults at the section between network element 1 and network element 8 and the fault disappears as an example, in combination with figures 3, 4 and 5, the procedure for carrying out the solution of the present invention by adopting two overhead byte transparent channels is described detailedly in the following.

Step 1, in the network management layer, available overheads of the optical fiber sections such as network elements 1-8, 1-2, 2-3, 3-4, 4-5, 5-6, 6-7, and 7-8 etc are determined. Then, through the overhead cross unit, the network element 1 turns on the available overheads of the 1-8 optical fiber section and the 1-2 optical fiber section. According to the same method, network elements 2-8 respectively turn on the available overheads of the optical fiber sections such as 1-2 and 2-3, 2-3 and 3-4, 3-4 and 4-5, 4-5 and 5-6, 5-6 and 6-7, and 6-7 and 7-8 etc. Finally the transparent channel which encircles the whole transmission ring network as shown in figure 3B is configured. In addition, during turning on the available overheads, the network elements configure the overhead bytes transmitted by the transparent channel as the default signaling code type of the protection switching protocol through the overhead cross unit, such as 0x0ff0.

Step 2, the network element 1 detects the alarm among the sections of network element 1-8, and notifies the protocol processing unit of the alarm, the protocol processing unit generates a signaling request, wherein the request type indicated by the K1 byte which is sent along the optical fiber direction of the network element 1-2 is a failure request, and the destination network element is 8. Then go to the next step.

Step 3, the overhead cross unit of the network element 1 cuts off the transparent channels of the optical fiber sections of the network elements 1-8 and the network elements 1-2, and copies K1 and K2 transmitted along the direction from the network element 1 to the network element 2 to the overhead bytes corresponding to transparent channel of the direction from the network element 1 to the network element 2 and sends it.

Step 4, the network element 2 detects that the overhead bytes of the transparent channel in the direction from the network element 1 to the network element 2 change. The network element 3 detects that the overhead bytes of the transparent channel in the direction from the network element 2 to the network element 3 change. Likewise, the network elements such as 4, 5, 6, and 7 also detect such a change. Then go to the next step.

Step 5, the network element 2 is currently in a non-switching state. The transparent channel overhead bytes received in direction from the network element 1 to the network element 2 as the K1 and K2 signaling bytes received in the direction from the network element 1 to the network element 2 are sent to the protocol processing module for processing and the protection channel is passed through. Likewise, network elements 3-7 are processed with the same method.

Step 6, the network element 8 detects that the protocol signaling (which is sent by the network element 7 after processing according to step 5) in the direction from the network element 7 to the network element 8 changes. Moreover, the signaling byte K1 indicates that the destination is the present network element, and the request type is a failure request, hence the network element 8 starts bridging switching immediately.

Step 7, when the network element 1 detects the alarm, the network element 8 also detects the alarm in the section of the network elements 1-8. Hence, the network element 8 and the network element 1 accomplish the above processing nearly at the same time, the processing fashion of the network element 8 is the same as that of the network element 1, and only difference is that the signaling transmission direction of the network element 8 is opposite to the direction of network element 1, wherein the transparent channel overhead bytes of the network 8 are transmitted along the direction of 8-7-6-5-4-3-2-1.

Step 8, nearly at the same time when the network element 8 detects the signaling in step 6, the network element 1 detects that the signaling (which is sent by the network element 2) in the direction from the network element 2 to the network element 1 changes, and the signaling byte K1 indicates that the destination is the present network element, the request type is a failure request, hence, the network element 1 starts bridging switching immediately.

Step 9, after the alarm at the section among the network elements 1-8 disappears, the network elements 1 and 8 automatically write the default signaling code type of the protection switching protocol into the transparent channel in the directions of 1-2-3-4-5-6-7-8 and 8-7-6-5-4-3-2-1 respectively, such as 0x0ff0, and turn on the transparent channel between 1-2 and 1-8, and 1-8 and 7-8 again. Other processing is accomplished completely in accordance with G.841.

The difference between the procedure for carrying out the solution of the present invention by adopting one overhead byte transparent channel and the transparent channel adopting two overhead bytes lies in that the network element of the present invention which sends information of the transparent channel needs to generate simplified signaling information according to the protocol signaling information to be sent. The network element which receives the information of the transparent channel needs to restore the simplified signaling information to the protocol signaling information.

That is, in step 3, according to the original network element ID and the destination network element ID indicated by K1 and K2 transmitted along the direction from the network element 1 to the network element 2, the network element 1 combines K1 and K2 as a overhead byte corresponding to transparent channel in the direction from the network element 1 to the network element 2 of one byte protocol, and sends it. For example, the network element of the request signaling is 1 and the destination network element of the request signaling is 8, then the content of the byte is 0x18.

In step 5, the network element 2 restores corresponding K1 and K2 according to the overhead byte of the transparent channel received in the direction from the network element 1 to the network element 2, the request type is defaulted as signal failure, and is sent to the protocol processing module as the K1 and K2 signaling bytes received in the direction from the network element 1 to the network element 2 for processing.

The network element 1 and the network element 8 do not process the received overhead bytes of the transparent channel. Through the above operation steps, it can be seen that the network elements 1 and 8 detect the alarm at the same time, and generate the protocol signaling and the overhead information of the transparent channel at the same time, and the middle network elements 2-7 quickly generate a signaling for sending and passes through the protection channel according to the information carried by the overhead bytes sent from the transparent channel of the two directions before receiving the changed protocol signaling, which has characteristics of quickness and efficiency.

Further, it can be seen from the above steps that main features of the method according to the present invention lie in configuring a transparent channel for sending request information quickly without changing the original protection switching protocol processing unit, thereby achieving a good reliability. Meanwhile, there are a great number of available overheads in the multiplexing section of SDH/SONET network, and compared with other methods introduced in Background Art, the method of the present invention has the character of low cost.

## Claims

**1.** A quick protection method for optical transmission ring network, **characterized in** comprising the following steps:

Step 1, configuring a transparent channel through a network management layer;
Step 2, a alarm detecting module of respective network elements detecting the situations of a optical line in real-time, and a signaling detecting unit detecting the changes of signaling bytes and transparent channel overhead bytes in real-time;
Step 3, if an alarm or a network management switching command is detected, executing step 4; if change of the transparent channel overhead bytes is detected, executing step 5; and if change of the signaling bytes is detected, executing step 6;
Step 4, after the network element which detects the alarm or the network management switching command finishing the protocol processing, an overhead cross unit cutting off an east-west direction transparent channel and copying the signaling bytes to be sent from a non-fault direction to the overhead bytes corresponding to the transparent channel for sending, and executing step 7;

Step 5, for the network element detecting the change of the transparent channel overhead bytes, if the current state is a switching state, then the overhead bytes being not processed; if the current state is an idle state or a pass-through state, then the overhead bytes being sent to a protocol processing module as the signaling bytes received by a signaling detecting unit in corresponding direction for processing, and going back to step 2;

Step 6, if a received signaling instruction is a short path request which destination is the present network element, after the network element finishes the protocol processing and cuts off the east-west transparent channel, the overhead cross unit copying the signaling bytes to be sent to the overhead bytes corresponding to the transparent channel for sending in another direction opposite that of receiving the short path request; or else, accomplishing processing according to G.841 protocol; and

Step 7, if the alarm disappears or the network management switching command is cancelled, two switching network elements automatically writing the default signaling code type of a protection switching protocol into the transparent channel, and turning on the east-west transparent channel again, then going back to step 2; otherwise, going back to step 2 directly.

2. The method according to claim 1, **characterized in that** the method for configuring the transparent channel in the step 1 is as follows: according to the use of respective multiplexing section overheads of the sections of the network elements, designating two available overhead bytes orderly at the east direction section and the west direction section of the network element, and turning on the east-west channel where the overhead bytes are located through the overhead cross unit.

3. A quick protection method in optical transmission ring network, **characterized in** comprising the following steps:

Step 1, configuring a transparent channel through a network management layer;

Step 2, an alarm detecting module of respective network elements detecting the situations of the optical line in real-time, and a signaling detecting unit detecting the changes of signaling bytes and transparent channel overhead bytes in real-time;

Step 3, if an alarm or a network management switching command is detected, executing step 4; if change of the transparent channel overhead bytes is detected, executing step 5; and if change of the signaling bytes is detected, executing step 6;

Step 4, after the network element which detects the alarm or the network management switching command finishes the protocol processing, the overhead cross unit cutting off the east-west transparent channel and generating a simplified signaling according to the protocol signaling information to be sent and writing it into the overhead bytes corresponding to the transparent channel for sending;

Step 5, for the network element which detects the change of the transparent channel overhead bytes, if the current state is a switching state, the overhead bytes being not processed; if the current state is an idle state or a pass-through state, then generating relevant received signaling information according to the simplified signaling and sending it to the protocol processing module for processing;

Step 6, if the received signaling instruction is a short path request which destination is the present network element, after the network element finishes the protocol processing and cuts off the east-west direction transparent channel, the overhead cross unit generating a simplified signaling according to the information to be sent and writing it into the overhead bytes corresponding to the transparent channel for sending, in another direction opposite to that of receiving the short path request; and

Step 7, if the alarm disappears or the network management switching command is cancelled, two switching network elements automatically writing the default signaling code type of the protection switching protocol into the transparent channel, and turning on the east-west direction transparent channel again, then going back to step 2; otherwise, going back to step 2 directly.

4. The method according to claim 3, **characterized in that** the method for configuring the transparent channel in the step 1 is as follows: according to the use of respective multiplexing section overheads of the sections of the network elements, designating one available overhead byte at the east direction section and the west direction section of the network element, and turning on the east-west direction channel where the overhead byte is located through the overhead cross unit.

FIG. 1

**FIG. 2A**

**FIG. 2B**

EP 1 796 296 A1

FIG. 3A

FIG. 3B

**FIG. 4**

start

configuring transparent channel
through a network management layer

detecting situations of circuitry and changes of
signaling bytes and overhead bytes of
transparent channel in real-time

is there an alarm or a network
management switching command? — No

Yes

cutting off transparent channel and
sending relevant information

is there change of overhead bytes
of transparent channel? — No

Yes

accomplishing protocol processing according
to overhead bytes of transparent channel

is there change of protocol
signaling bytes? — No

Yes

receiving short path request, cutting off transparent
channel, and sending relevant information.
Accomplishing other processing
according to G.841 suggestion

the alarm
No — disappearing or the network management
switching command being
cancelled?

Yes

connecting transparent channel, and accomplishing
other processing according to G.841 suggestion

## FIG. 5

# EP 1 796 296 A1

<table>
<tr><td rowspan="2" style="text-align:center"><b>INTERNATIONAL SEARCH REPORT</b></td><td>International application No.</td></tr>
<tr><td>PCT/CN2005/000321</td></tr>
</table>

**A. CLASSIFICATION OF SUBJECT MATTER**

IPC7: H04B 10/08

According to International Patent Classification (IPC) or to both national classification and IPC

**B. FIELDS SEARCHED**

Minimum documentation searched (classification system followed by classification symbols)

IPC7: H04B

Documentation searched other than minimum documentation to the extent that such documents are included in the fields searched

Electronic data base consulted during the international search (name of data base and, where practicable, search terms used)

WPI,EPODOC,PAJ.CNPAT

**C. DOCUMENTS CONSIDERED TO BE RELEVANT**

| Category* | Citation of document, with indication, where appropriate, of the relevant passages | Relevant to claim No. |
|---|---|---|
| A | CN1505303 A 2004-6-6 HUAWEI TECH CO LTD SHENZHEN CITY | 1-4 |
| A | US2004179472 A1 2004-9-16 FUJITSU NETWORK COMMUNICATIONS INC | 1-4 |
| | | 1-18 |

☐ Further documents are listed in the continuation of Box C.     ☒ See patent family annex.

| | |
|---|---|
| *    Special categories of cited documents: | "T"  later document published after the international filing date or priority date and not in conflict with the application but cited to understand the principle or theory underlying the invention |
| "A"  document defining the general state of the art which is not considered to be of particular relevance | |
| "E"  earlier application or patent but published on or after the international filing date | "X"  document of particular relevance; the claimed invention cannot be considered novel or cannot be considered to involve an inventive step when the document is taken alone |
| "L"  document which may throw doubts on priority claim (S) or which is cited to establish the publication date of another citation or other special reason (as specified) | "Y"  document of particular relevance; the claimed invention cannot be considered to involve an inventive step when the document is combined with one or more other such documents, such combination being obvious to a person skilled in the art |
| "O"  document referring to an oral disclosure, use, exhibition or other means | |
| "P"  document published prior to the international filing date but later than the priority date claimed | "&"document member of the same patent family |

| Date of the actual completion of the international search | Date of mailing of the international search report |
|---|---|
| 2005/5/24 | 16 · JUN 2005 |

| Name and mailing address of the ISA/CN | Authorized officer |
|---|---|
| The State Intellectual Property Office, the P.R.China<br>6 Xitucheng Rd., Jimen Bridge, Haidian District, Beijing, China<br>100088<br>Facsimile No. 86-10-62019451 | Wang qiong<br><br>Telephone No. (86-10)62084544 |

Form PCT/ISA /210 (second sheet) (April 2005)

13

INTERNATIONAL SEARCH REPORT
Information on patent family members

International application No.

PCT/CN2005/000321

| Patent Documents referred in the Report | Publication Date | Patent Family | Publication Date |
|---|---|---|---|
| CN1505303 A | 2004-6-16 | AU2003289639 A1 | 2004-6-23 |
| | | WO2004051934 A1 | 2004-6-17 |
| US2004179472 A1 | 2004-9-16 | WO2004084446 A2 | 2004-9-30 |

Form PCT/ISA/210 (patent family annex) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 98113149
- US 5636205 A
- WO 98113149 A
- WO 5636205 A